(19) Europäisches Patentamt
European Patent Office
Office européen des brevets

(11) Veröffentlichungsnummer: **0 376 005 A2**

(12) **EUROPÄISCHE PATENTANMELDUNG**

(21) Anmeldenummer: 89122427.1

(51) Int. Cl.5: C08G 65/38

(22) Anmeldetag: 05.12.89

(30) Priorität: 17.12.88 DE 3842624

(43) Veröffentlichungstag der Anmeldung: 04.07.90 Patentblatt 90/27

(84) Benannte Vertragsstaaten: DE FR GB IT

(71) Anmelder: BAYER AG
D-5090 Leverkusen 1 Bayerwerk(DE)

(72) Erfinder: Mayska, Paul Johannes, Dr.
Bodelschwinghstrasse 18
D-4150 Krefeld(DE)
Erfinder: Eckhardt, Volker, Dr.
Bodelschwinghstrasse 14
D-4150 Krefeld(DE)
Erfinder: Freitag, Dieter, Dr.
Hasenheide 10
D-4150 Krefeld(DE)
Erfinder: Idel, Karsten-Josef, Dr.
Am Schwarzkamp 38
D-4150 Krefeld(DE)

(54) **Verfahren zur Herstellung von bifunktionellen Polyphenylenoxiden mit endständigen OH-Gruppen.**

(57) Die Erfindung betrifft ein neues Verfahren zur Herstellung von bifunktionellen Polyphenylenoxiden, die an beiden Kettenenden OH-Gruppen als funktionelle Gruppen tragen.

EP 0 376 005 A2

Xerox Copy Centre

## Verfahren zur Herstellung von bifunktionellen Polyphenylenoxiden mit endständigen OH-Gruppen

Die Erfindung betrifft ein neues Verfahren zur Herstellung von bifunktionellen Polyphenylenoxiden, die an beiden Kettenenden OH-Gruppen als funktionelle Gruppen tragen.

Verschiedene Verfahren zur Herstellung von Polyphenylenethern (Polyphenylenoxiden) sind bekannt.

Die Herstellung von Polyphenylenethern mit endständigen OH-Gruppen ist bekannt, z.B. DE-A 3 340 493, DE-A 3 308 421, DE-A 3 505 142.

Aus der DE-A 3 340 493 ist bekannt, Polyphenylenoxide mit je einer terminalen OH-Gruppe an jedem Kettenende herzustellen, in dem man Bisphenole mit Halogenphenolen in Gegenwart eines Oxidationsmittels umsetzt.

Aus der DE-A 3 308 421 ist bekannt, bifunktionelle Polyphenylenoxide mit je einer OH-Gruppe am Kettenende her zustellen indem man Bisphenole mit Phenolen, die nur eine OH-Gruppe tragen, in Gegenwart von Katalysatoren mit Sauerstoff oxidiert.

Die Erfindung betrifft ein Verfahren zur Herstellung von bifunktionellen Polyphenylenethern (Polyphenylenoxiden) mit je einer Hydroxylgruppe an jedem Kettenende der Formel (I)

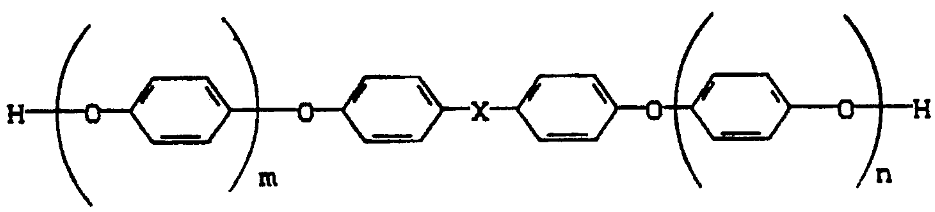 (I),

in welcher
X für eine Gruppe

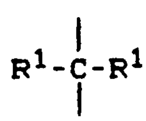

steht, in der $R^1$ für Wasserstoff oder einen Alkylrest mit 1 bis 10 C-Atomen, -CO-, S, -O-,

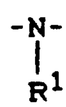

oder $-SO_2-$, 3,3,5-Trimethylcyclohexyliden, Isopropyliden steht,
m und n unabhängig voneinander für eine ganze Zahl von 5 bis 60 stehen,
dadurch gekennzeichnet ist, daß ein Gemisch der Phenole der Formeln (II) und (III)

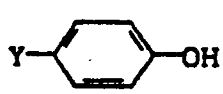 (II), 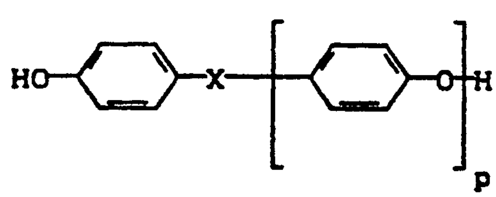 (III),

in welchen
X die bei Formel (I) angegebene Bedeutung hat und
Y für Halogen wie Cl, Br oder I steht,
p für die Zahl 1 steht und für den Fall, daß X für O (Sauerstoff) steht,
p zusätzlich für die Zahl Null (O) stehen kann,

in Gegenwart von Cu(I)halogenid wie CuCl, CuBr bei einer Temperatur von -80 °C bis 250 °C in einem dipolar aprotischen Lösungsmittel, ausgewählt aus der Gruppe DMI (N,N′-Dimethylimidazolidin-2-on), NMC (N-Methylcaprolactam), NMP (N-Methylpyrrolidon), Dipenylsulfon und DMSO (Dimethylsulfoxid) miteinander umgesetzt werden.

Das erfindungsgemäße Verfahren benötigt keinen sonst üblichen Zusatz von Aminen als Co-Katalysator. Es kann vorteilhafter Weise Alkalihydroxid wie NaOH, KOH verwendet werden.

Dem Umsetzungsgemisch werden pro Äquivalent phenolischer OH-Gruppe 1 bis 2 Äquivalente Metallhydroxid, vorzugsweise Alkalihydroxid wie NaOH, KOH, vorzugsweise in wäßriger Lösung zugesetzt. Vorzugsweise werden konzentrier te (z.B. 10-50 Gew.-% wäßrige Hydroxidlösungen eingesetzt. Durch den Zusatz der Metallhydroxide können die Phenole in die Metallphenolate überführt werden.

Als Bisphenole können z.B. Hydrochinon, 2,2-Bis-(4-hydroxyphenyl)-propan (Bisphenol A), 4,4′-Dihydroxydiphenylether (DOD-Ether), 4,4′-Dihydroxydiphenyl, Bis-(4-hydroxyphenyl)-3,3,5-trimethylcyclohexan (HIP-Bisphenol) u.s.w. verwendet werden. Vorzugsweise wird 4,4′-Dihydroxidiphenylether verwendet.

Die Reaktion kann vorzugsweise bei Temperaturen von 150 °C bis 350 °C durchgeführt werden, besonders bevorzugt bei 170 - 200 °C.

Bei der Herstellung der Oligo- bzw. Polyphenylenoxide können gegebenenfalls verzweigend wirkende Verbindungen, z.B. 1,3,5-Trihydroxybenzol (Phloroglucin), 1,3,5-Tribrombenzol, 1,3-Dibrom-5-hydroxybenzol, anwesend sein. Die Verwendung dieser Verbindungen hat einen Einfluß auf die Funktionalität der Oligo- bzw. Polyphenylenoxide.

Als Halogenphenole der Formel (I) können 4-Chlorphenol, 4-Bromphenol u.s.w. eingesetzt werden.

Die erfindungsgemäß hergestellten bifunktionellen Polyphenylenoxide können wie in der DE-A 3 505 142 beschriebenen Art und Weise zu Blockcopolymeren umgesetzt werden.

## Beispiele

### Beispiel 1

Herstellung eines dihydroxylfunktionellen Oligophenylenoxids

In einem 500-ml-Dreihalskolben, ausgerüstet mit Rührer, Thermometer, Wasserabscheider und Rückflußkühler, werden 25,95 g (0,15 Mol) p-Bromphenol, 7,58 g (0,0375 Mol, 25 Mol-%) 4,4′-Dihydroxydiphenylether (DOD-Ether), 80 g N,N′-Dimethylimidazolidin-2-on (DMI), 100 ml Toluol und 31,56 g (0,225 Mol) 40 %ige Kalilauge unter Stickstoff chargiert und anschließend so lange am Rückfluß gehalten, bis alles Wasser aus dem System entfernt ist. Bei 150 °C werden noch 120 mg Cu(I)Cl zugegeben und auf 195 °C erhitzt. Es wird 4 Stunden bei 195 °C gehalten und nach dem Abkühlen in 5 %iger Salzsäure gefällt. Das Produkt wird abgesaugt, mit destilliertem Wasser neutral gewaschen. Anschließend wird es im salzsauren Methanol (2:1) 2 Stunden am Rückfluß gekocht, neutral gewaschen und getrocknet.

Ausbeute: 80 %
Schmelzpunkt: 157 °C
Gesamt-Brom: < 0,02 %
Anorganisches Brom: < 30 ppm

Durch Hochtemperatur-Gelchromatographie wurde die Molekulargewichtsverteilung des Produktes charakterisiert:

$M_w$ = 2 159 g/mol
$M_n$ = 1 310 g/mol
$U_1$ = 0,65

### Beispiel 2

Herstellung eines dihydroxylfunktionellen Oligophenylenoxids mit höherem Molekulargewicht

In die in Beispiel 1 beschriebene Apparatur wurden folgende Komponenten eingewogen und nach dem dort beschriebenen Verfahren umgesetzt:

| | |
|---|---|
| 25,95 g | (0,15 Mol) p-Bromphenol |
| 3,03 g | (0,015 Mol, 10 Mol-%) DOD-Ether |
| 28,41 g | (0,18 Mol) 40 %ige Kalilauge |
| 80,00 g | DMI |
| 100 ml | Toluol |
| 120 mg | Cu(I)Cl |

Ausbeute: 82 %
Schmelzpunkt: 180° C
Gesamt-Brom: 0,35 %
Anorganisches Brom: < 0,01 %

Durch Hochtemperatur-Gelchromatographie wurde die Molekulargewichtsverteilung des Produktes charakterisiert:

$M_w$ = 3 600 g/mol
$M_n$ = 1 642 g/mol
$U_1$ = 1,19

Beispiel 3

Herstellung eines dihydroxylfunktionellen Oligophenylenoxids mit Bisphenol A in NMP als Lösungsmittel.

16,09 g (76,2 mmol) Kaliumbromphenolat, 2,32 g (7,62 mmol) Dikaliumsalz des 2,2-Bis-(4-hydroxyphenyl)-propans (BPA- Dikaliumsalz) und 60 mg Kupfer-(I)-chlorid werden unter Stickstoff in einen dreimal in Ölpumpenvakuum ausgeheizten und mit Stickstoff gefüllten 100 ml-Dreihalskolben eingewogen. Im Stickstoffgegenstrom wird die Rührerhülse mit KPG-Rührer aufgesetzt und weitere dreimal evakuiert und mit Stickstoff begast. Anschließend wird 40 ml wasserfreies und sauerstofffreies N-Methylpyrrolidon (2) hinzugegeben und der Kolben in die 190° C heiße Salzschmelze eingetaucht. Man erhält eine dunkelbraun gefärbte homogene Lösung, aus der nach etwa 10 min ein Feststoff ausfällt. Man läßt 6 Stunden bei einer Badtemperatur von 190° C (Innentemperatur 170° C) rühren. Anschließend wird auf 100° C abgekühlt und das Produkt in 600 ml 0,2 n wäßriger Salzsäure ausgefällt. Es wird mehrmals mit Wasser gewaschen. Nach dem Trocknen wird das Rohprodukt in der Hitze in 50 ml DMF gelöst und in 600 ml Wasser ausgefällt. Das Produkt wird abfiltriert und an der Ölpumpe bei 80° C über $P_2O_5$ getrocknet.
Ausbeute: 71 %
$M_n$ = 784 g/mol (Dampfdruckosmometrie)

Beispiel 4

Bestimmung der Funktionalität - Umsetzung mit Brombenzolsulfonsäurechlorid

542,1 mg (0,691 mmol) Poly(oxy-1,4-phenylen) (Beispiel 3, $M_n$ = 784 nach dampfdruckosmometrischer Methode bestimmt), 883,3 mg (3,457 mmol) 4-Brombenzolsulfonsäurechlorid und 20 ml wasser- und sauerstofffreies Pyridin (Pyr) werden in einen dreimal im Ölpumpenvakuum ausgeheizten und mit Stickstoff gefüllten 50 ml Stickstoffkolben mit Rückflußkühler gegeben und zum Sieden erhitzt. Dabei geht das Polymer vollständig in Lösung. Man läßt 4 Stunden refluxieren. Dann kühlt man auf Raumtemperation ab und fällt das Produkt in 100 ml Methanol. Es wird abfiltriert, mit Methanol und Wasser gewaschen und an der Ölpumpe bei 80° C über $P_2O_5$ getrocknet. Das Rohprodukt wird in 20 ml DMF gelöst und aus 100 ml Methanol gefällt. Nach mehrmaligem Waschen mit Methanol und Wasser wird das Produkt an der Ölpumpe bei 80° C über $P_2O_5$ getrocknet (Ausbeute: 394,1 mg)

Das Bromgehalt des veresterten Poly(oxy-1,4-phenylens) beträgt 9,90 % (Ausgangspolymer: 0,33 %) und das Mole kulargewicht $M_n$ = 1282. Aus der Differenz der Bromgehalte errechnet sich für das Ausgangspolymer nach Gleichung 1 eine OH-Funktionalität von 1,5.

$$\text{Gleichung 1:}\quad f = \frac{M_n \cdot (X_P\,\% - X_E\,\%)}{100\,\% \cdot 79{,}904\ \text{g/mol}}$$

$M_n$ = dampfdruckosmometrisch bestimmtes Molekulargewicht des veresterten Polymeren
$X_E$ = Bromgehalt des Ausgangspolymeren
$X_P$ = Bromgehalt des veresterten Polymeren

Beispiel 5

Umsetzung eines dihydroxylfunktionellen Oligophenylenoxids mit Terephthaloylchlorid

In einen dreimal im Ölpumpenvakuum ausgeheizten und mit Stickstoff gefüllten 100 ml Dreihalskolben werden 4,0 g (3,490 mmol) Poly(oxy-1,4-phenylen) $M_n$ = 1 146 g/mol, Funktionalität = 1,9), 0,6731 g (3,3155 mmol) Terephthaloylchlorid, 50 ml aufgeschmolzenen Diphenylether gegeben. Im Stickstoffgegenstrom wird ein Rückflußkühler mit Blasenzähler aufgesetzt und eine Stunde mit Stickstoff gespült. Anschließend wird der Reaktionsansatz zum Sieden erhitzt, wobei der Feststoff vollständig in Lösung geht. Man läßt solange refluxieren, bis keine Salzsäure-Entwicklung mehr beobachtet wird (Rotfärbung von Lackmuspapier). Der Reaktionssatz bleibt über die gesamte Reaktionszeit von 48 Stunden homogen. Nachdem auf 100 °C abgekühlt wurde, wird das Produkt in 600 ml Methanol ausgefällt, abfiltriert, Mit Methanol mehrmals gewaschen und dann an der Ölpumpe bei 80 °C über $P_2O_5$ getrocknet.
Ausbeute: 80,4 %
Mittleres Molekulargewicht: $M_n$ = 3 203 g/mol (dampfdruckosmometrische Bestimmung

## Ansprüche

1. Verfahren zur Herstellung von bifunktionellen Polyphenylenethern (Polyphenylenoxiden) mit je einer Hydroxylgruppe an jedem Kettenende der Formel (I)

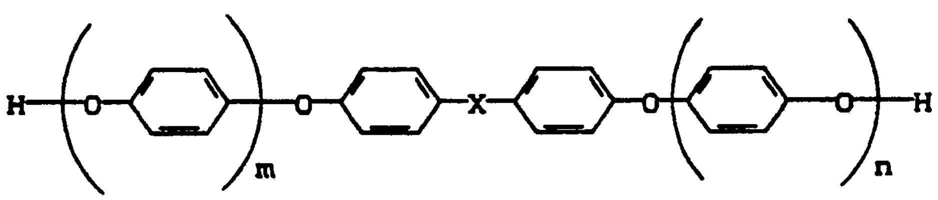 (I),

in welcher
X für eine Gruppe

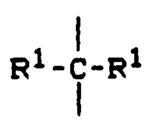

steht, in der $R^1$ für Wasserstoff oder einen Alkylrest mit 1 bis 10 C-Atomen, -CO-, S,

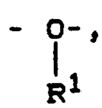

-N- oder $-SO_2-$, 3,3,5-Trimethylcyclohexyliden, Isopropyliden steht, m und n unabhängig voneinander für eine ganze Zahl von 5 bis 60 stehen, dadurch gekennzeichnet ist, daß ein Gemisch der Phenole der Formeln (II) und (III)

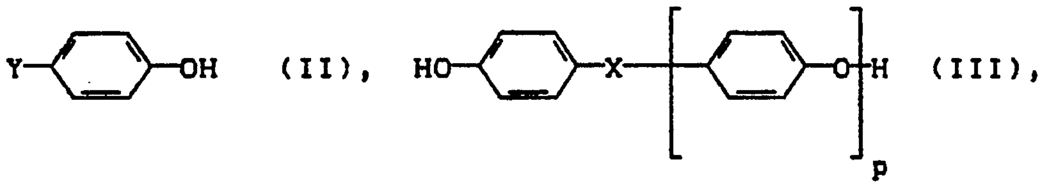

in welchen X die bei Formel (I) angegebene Bedeutung hat und Y für Halogen steht, p für die Zahl 1 steht und für den Fall, daß X für O (Sauerstoff) steht, p zusätzlich für die Zahl Null (O) stehen kann, in Gegenwart von Cu(I)halogenid bei einer Temperatur von -80°C bis 250°C in einem dipolar aprotischen Lösungsmittel, ausgewählt aus der Gruppe DMI (N,N′-Dimethylimidazolidin-2-on), NMC (H-Methylcaprolactam), NMP (N- Methylpyrrolidon), Dipenylsulfon und DMSO (Dimethyl sulfoxid), miteinander umgesetzt werden.

2. Verwendung der Polyphenylenoxide hergestellt nach Anspruch 1 zur Herstellung von Blockcopolmeren.